# FASCICULE DE BREVET EUROPEEN

(11) **EP 3 661 827 B1**
(45) Date de publication et mention de la délivrance du brevet: **05.03.2025**
(21) Numéro de dépôt: 18746707.1
(22) Date de dépôt: 30.07.2018
(51) Int. Cl.: B60W 50/00, B60W 50/02, B60W 50/023, B60W 50/08, B60W 50/14, B60W 50/035, B60W 50/029

(54) **PROCÉDÉ D'ÉLABORATION D'UNE CONSIGNE DE PILOTAGE D'UN ORGANE DE CONDUITE D'UN VÉHICULE AUTOMOBILE**
VERFAHREN ZUR ERZEUGUNG EINES REGELSOLLWERTS FÜR EIN ANTRIEBSELEMENT EINES KRAFTFAHRZEUGS
METHOD FOR CREATING A CONTROL SETPOINT FOR A DRIVING MEMBER OF A MOTOR VEHICLE

(30) Priorité: 02.08.2017 FR 1757440
(43) Date de publication de la demande: 10.06.2020
(73) Titulaire: Valeo Schalter und Sensoren GmbH, 74321 Bietigheim-Bissingen (DE)
(72) Inventeur: LEEMAN, Michel, 94046 Creteil (FR)
(74) Mandataire: Withopf, Kristina
(86) Numéro de dépôt international: PCT/EP2018/070523
(87) Numéro de publication internationale: WO 2019/025333

(56) Documents cités:
- WO-A1-2016/162624
- WO-A1-2016/162624
- DE-A1- 102010 021 591
- DE-A1- 102010 021 591

## Description

### DOMAINE TECHNIQUE AUQUEL SE RAPPORTE L'INVENTION

La présente invention concerne de manière générale les aides à la conduite de véhicules automobiles.

Elle concerne plus particulièrement un procédé d'élaboration d'une consigne de supervision pour le pilotage d'au moins un organe de conduite d'un véhicule automobile (typiquement le système de direction et/ou le système de freinage et/ou le moteur du véhicule automobile...).

L'invention concerne également un système de pilotage d'au moins un organe de conduite d'un véhicule automobile, adapté à élaborer cette consigne de supervision.

L'invention s'applique plus particulièrement aux véhicules dotés d'un mode de conduite autonome.

### ARRIERE-PLAN TECHNOLOGIQUE

Pour faciliter et rendre plus sûre la conduite d'un véhicule automobile, il est connu d'équiper ce dernier de systèmes d'aide à la conduite. Il peut s'agir de systèmes permettant une conduite autonome du véhicule (sans intervention humaine), ou de systèmes permettant une conduite partiellement autonome du véhicule (typiquement de systèmes adaptés à prendre momentanément le contrôle du véhicule, par exemple pour opérer un freinage d'urgence ou pour replacer le véhicule au centre de sa voie de circulation).

Pour permettre à ces systèmes d'appréhender l'environnement autour du véhicule, on place sur ce dernier de nombreux capteurs tels que des caméras, des capteurs RADAR, LIDAR, SONAR...

Chaque capteur présente ses qualités et ses défauts.

Afin de réduire au mieux les erreurs de détection de l'environnement, il est alors connu de pratiquer de la « fusion de données », c'est-à-dire de prendre en compte les données émises par différents capteurs pour en déduire une seule et même donnée d'environnement. Ainsi est-il possible de tirer parti des qualités de chaque capteur.

Malheureusement, même ainsi, il arrive encore que le calculateur commette des erreurs, c'est-à-dire qu'il se méprenne sur une situation. A titre d'exemple, il peut considérer à tort un objet anodin comme un obstacle dangereux et donc commander un freinage d'urgence inutile et risqué pour les véhicules qui le suivent.

On cherche alors à réduire ces erreurs.

WO 2016/162624 A1 divulgue un procédé et un système d'élaboration d'une consigne de supervision pour un véhicule, comprenant des calculateurs redondants et sélectionnant un résultat issu d'un des calculateurs sur la base d'un diagnostique respectif.

### OBJET DE L'INVENTION

La présente invention propose pour cela un nouveau procédé et un nouveau système répondant à un niveau ASIL D tel que défini par la norme ISO26262.

Plus particulièrement, on propose selon l'invention un procédé d'élaboration d'une consigne de supervision pour le pilotage d'au moins un organe de conduite d'un véhicule automobile équipé d'une pluralité de capteurs, comprenant :
- une première étape de fusion des signaux reçus d'une première partie au moins des capteurs, pour déterminer au moins une première donnée relative à l'environnement autour du véhicule automobile,
- une seconde étape de fusion des signaux reçus d'une seconde partie au moins des capteurs, pour déterminer au moins une seconde donnée relative à l'environnement autour du véhicule automobile,
- une étape de calcul d'une première consigne préliminaire de supervision en fonction de chaque première donnée,
- une étape de comparaison des première et seconde données pour établir un premier diagnostic,
- une étape de contrôle de la première consigne préliminaire de supervision, compte tenu d'au moins l'une des première et seconde données, pour établir un second diagnostic, et
- une étape de détermination de la consigne de supervision en fonction des premier et second diagnostics. Les étapes de fusion et de calcul sont mises en œuvre par un calculateur principal équipant le véhicule automobile. Il est prévu une autre étape de calcul, mise en œuvre par un calculateur auxiliaire équipant le véhicule automobile, d'une seconde consigne préliminaire de supervision de chaque organe de conduite, compte tenu de signaux émis par une troisième partie au moins des capteurs. À l'étape de détermination, la consigne de supervision est choisie égale à la seconde consigne préliminaire de supervision si le premier diagnostic indique une discordance entre les résultats des deux étapes de fusion et/ou si le second diagnostic indique une discordance entre la première consigne préliminaire de supervision et les résultats de l'une au moins des deux étapes de fusion.

Les première et seconde données issues des étapes de fusion sont ainsi comparées. Si elles ne diffèrent pas trop (ou sont conformes), on en conclue que le risque qu'une erreur de fusion ait été commise est faible (premier diagnostic).

La première consigne préliminaire de supervision est quant à elle contrôlée en vérifiant que sa valeur n'est pas étonnante, compte tenu des données issues de l'une au moins des deux étapes de fusion, de façon à en conclure si une erreur de calcul de cette consigne a été commise (second diagnostic).

Ces deux diagnostics permettent ainsi de contrôler avec une grande fiabilité et une grande simplicité que la première consigne préliminaire de supervision peut être utilisée.

D'autres caractéristiques avantageuses et non limitatives du procédé conforme à l'invention sont les suivantes :
- à l'étape de détermination, la consigne de supervision est choisie égale à la première consigne préliminaire de supervision si le premier diagnostic indique une concordance entre les résultats des deux étapes de fusion et si le second diagnostic indique une concordance entre la première consigne préliminaire de supervision et les résultats de l'une au moins des deux étapes de fusion ;
- la consigne de supervision est nulle si le premier diagnostic indique une discordance entre les résultats des deux étapes de fusion et/ou si le second diagnostic indique une discordance entre la première consigne préliminaire de supervision et les résultats de l'une au moins des deux étapes de fusion ;
- à l'étape de contrôle, on vérifie que la valeur de la première consigne préliminaire de supervision est comprise dans un intervalle dont les bornes sont définies en fonction de ladite première donnée ;
- lesdites première et seconde parties des capteurs forment deux ensembles disjoints ou sécants.

L'invention propose également un système de pilotage qui est adapté à mettre en œuvre un procédé d'élaboration d'une consigne de supervision tel que défini ci-dessus, comprenant à cet effet :
- un calculateur principal adapté à recevoir des signaux d'une pluralité de capteurs équipant le véhicule automobile et à calculer une première consigne préliminaire de supervision pour le pilotage de chaque organe de conduite, et
- un relais qui reçoit du calculateur principal ladite première consigne préliminaire de supervision et qui est adapté à la communiquer ou non à chaque organe de conduite.

Ce système de pilotage comprend en outre un calculateur auxiliaire adapté à recevoir des signaux d'une pluralité de capteurs équipant le véhicule automobile et à calculer une seconde consigne préliminaire de supervision pour le pilotage de chaque organe de conduite, auquel cas le relais est adapté à communiquer à chaque organe de conduite l'une ou l'autre des première et seconde consignes préliminaire de supervision.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

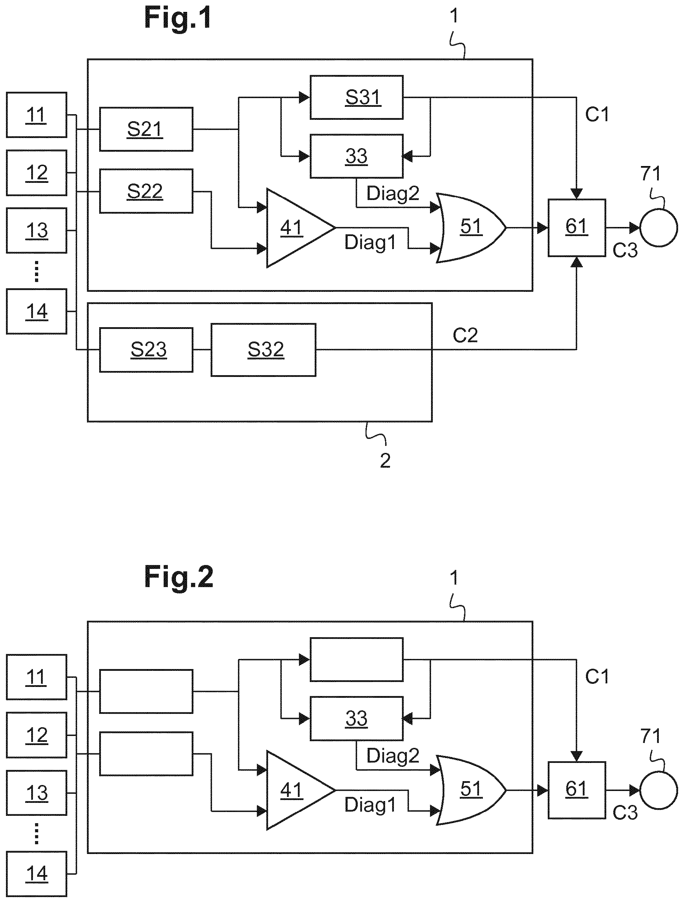

- les figures 1 et 2 sont des schémas illustrant deux modes de réalisation d'un système de pilotage**,** le premier mode illustré sur la figure 1 étant conforme à l'invention, le deuxième mode illustré sur la figure 2 n'étant pas compris dans la portée de l'invention.

En préliminaire on notera que les éléments identiques ou similaires des différents modes de réalisation de l'invention représentés sur les différentes figures seront, dans la mesure du possible, référencés par les mêmes signes de référence et ne seront pas décrits à chaque fois.

L'invention porte sur un véhicule automobile équipé d'un système de pilotage permettant une conduite autonome du véhicule, sans intervention humaine.

Elle porte plus précisément sur un système de pilotage d'au moins un organe de conduite 71.

Dans les exemples représentés sur les figures, seul un organe de conduite 71 est considéré, mais un nombre plus élevé d'organes de conduite 71 pourra être piloté de la même manière.

Cet organe de conduite 71 pourra par exemple être formé par le moteur du véhicule, ou par le dispositif de direction. Dans la suite de cet exposé, on considérera plutôt que l'organe de conduite 71 est constitué par le système de freinage du véhicule.

Sur les exemples représentés, le système de pilotage est connecté, en entrée, à plusieurs capteurs 11, 12, 13, 14, et, en sortie, à l'organe de conduite 71.

Tout type de capteur peut être employé. A titre d'exemple, le véhicule automobile pourra être équipé d'au moins quatre caméras respectivement orientées vers les quatre côtés du véhicule. Il pourra également comporter des capteurs RADAR et/ou LIDAR et/ou SONAR, orientés dans différentes directions de l'espace.

Chaque capteur présente des qualités et des défauts. A titre d'exemple, une caméra permet une bonne détection d'obstacle à courte portée tandis qu'un capteur RADAR permet une bonne détection d'obstacle à longue distance.

Le système de pilotage est alors connecté, en entrée, à ces différents capteurs de façon à pouvoir élaborer une consigne de supervision C3 en fonction des signaux reçus de ces capteurs et à pouvoir la transmettre à l'organe de conduite 71.

Dans la suite de cet exposé, on considérera que cette consigne de supervision C3 pourra être formée par une consigne de réduction de vitesse à imposer au véhicule automobile au cours d'une durée prédéterminée.

La consigne de supervision C3 transmise à l'organe de conduite 71 sera élaborée en fonction des signaux reçus de plusieurs capteurs 11, 12, 13, 14, en fusionnant les données fournies par ces signaux.

Par « fusion de données », on entend une méthode mathématique qui est appliquée à plusieurs données issues de capteurs hétérogènes et qui permet de créer ou affiner une donnée relative à l'environnement autour du véhicule automobile.

A titre d'exemple, on peut fusionner les données issues des images acquises par la caméra frontale avec les données issues des autres capteurs orientés vers l'avant du véhicule, afin de détecter un éventuel obstacle et de déterminer sa position exacte.

Sur les figures 1 et 2, on a représenté deux modes de réalisation du système de pilotage de l'organe de conduite 71, le deuxième n'étant pas compris dans la portée de l'invention.

Dans une première partie de cet exposé, on pourra tout d'abord décrire en détail le premier mode de réalisation du système de pilotage, en référence à la figure 1. Le second mode de réalisation sera quant à lui décrit plus loin dans cet expose.

Dans le premier mode de réalisation, le système de pilotage comprend :
- deux calculateurs connectés aux capteurs 11, 12, 13, 14, à savoir un calculateur principal 1 et un calculateur auxiliaire 2, et
- un relais 61 qui est connecté aux deux calculateurs 1, 2.

De manière avantageuse, le relais 61 répond à un niveau ASIL-D. Il comporte une sortie et trois entrées. Il permet de transmettre sur sa sortie les informations qu'il reçoit sur l'une ou l'autre de deux de ses entrées (l'entrée considérée étant sélectionnée en fonction des informations que le relais reçoit sur sa troisième entrée).

Ici, et de manière préférentielle, le calculateur principal 1 est plus fiable que le calculateur auxiliaire 2. Il répond à un niveau ASIL-D alors que le calculateur auxiliaire 2 répond ici seulement à un niveau ASIL-B. Il est également plus puissant que ce dernier. Le calculateur auxiliaire 2 est donc moins onéreux et est ici conçu pour réaliser des opérations plus simples que celles opérées par le calculateur principal 1.

Dans la pratique, le calculateur principal 1 est conçu pour réaliser des opérations complexes permettant au véhicule automobile d'évoluer de manière autonome sur une durée prolongée, sans intervention aucune du conducteur.

Le calculateur auxiliaire 2 est quant à lui seulement conçu pour réaliser des opérations simples permettant au véhicule automobile d'évoluer de manière autonome pendant une durée limitée (cette durée limitée pouvant être de quelques secondes, de quelques minutes, voire d'une heure), afin de laisser le temps au conducteur de reprendre la main et/ou afin de réaliser un freinage d'urgence.

Tandis que le calculateur principal 1 prend en compte les données issues de capteurs de toutes catégories, le calculateur auxiliaire 2 prend en compte les données issues d'un nombre plus restreint de capteurs, qui sont tous issus d'une catégorie particulière : les capteurs fiables et éprouvés (c'est-à-dire les capteurs plus fiables et éprouvés que la moyenne des capteurs).

Ces deux calculateurs 1, 2 sont adaptés à travailler en parallèle.

Ils comportent chacun un processeur (CPU), une mémoire vive (RAM) et/ou morte (ROM), et différentes interfaces d'entrée et de sortie pour communiquer avec les capteurs 11, 12, 13, 14 et avec le relais 61.

La mémoire de chaque calculateur mémorise des données utilisées dans le cadre du procédé décrit ci-dessous. Elle mémorise notamment une application informatique, constituée de programmes d'ordinateur comprenant des instructions dont l'exécution par le processeur permet la mise en œuvre par les calculateurs du procédé décrit ci-après.

La méthode d'élaboration de la consigne de supervision C3 (permettant de piloter l'organe de conduite 71) peut maintenant être décrite en détail.

Cette méthode est ici mise en œuvre en plusieurs étapes successives. En variante, les étapes pourraient être mises en œuvre dans un ordre différent de celui décrit ci-après.

Au cours d'une première étape S21, le calculateur principal 1 opère une première fusion des signaux reçus d'un premier ensemble des capteurs 11, 12, 13, 14.

Au cours d'une seconde étape S22, le calculateur principal 1 opère une fusion des signaux reçus d'un second ensemble des capteurs 11, 12, 13, 14.

Au cours d'une troisième étape S23, le calculateur auxiliaire 2 opère une fusion des signaux reçus d'un troisième ensemble des capteurs 11, 12, 13, 14.

Chacune de ces trois étapes S21, S22, S23 permet de déterminer au moins une donnée relative à l'environnement autour du véhicule automobile. Il peut par exemple s'agir d'une distance à un obstacle, d'une direction d'obstacle, d'une position de voie de circulation, ...

Les données issues des première et seconde étapes S21, S22 sont de même nature. Autrement formulé, si la première étape S21 permet de calculer une distance à un obstacle et une direction d'obstacle, la seconde étape S22 sera également prévue pour calculer la distance à ce même obstacle et sa direction.

Les méthodes de calcul utilisées au cours des première et seconde étapes S21, S22 ou les données utilisées en entrées sont en revanche différentes. Ainsi, si les premier, second et troisième ensembles de capteurs pourront être identiques, ils seront de préférence disjoints ou sécants.

De manière préférentielle, le troisième ensemble de capteurs sera le plus réduit. Les premier et second ensembles de capteurs seront de préférence sécants.

Au cours d'une quatrième étape S31, le calculateur principal 1 calcule une première consigne préliminaire de supervision C1 susceptible de permettre de piloter l'organe de conduite 71 en fonction des données issues des capteurs.

Cette première consigne préliminaire de supervision C1 est calculée au moyen d'un premier algorithme, en fonction uniquement des données issues de la première étape S21 de fusion.

Au cours d'une cinquième étape S32, le calculateur auxiliaire 2 calcule une seconde consigne préliminaire de supervision C2 susceptible de permettre de piloter l'organe de conduite 71 en fonction des données issues des capteurs.

Cette seconde consigne préliminaire de supervision C2 est calculée au moyen d'un second algorithme, en fonction uniquement des données issues de la troisième étape S23 de fusion.

On notera ici que ces deux algorithmes sont différents, et que le second algorithme comporte un nombre d'instructions inférieurs à celui du premier algorithme.

De tels algorithmes étant bien connus de l'homme du métier, ils ne seront pas ici décrits en détail. On pourra seulement préciser qu'à titre d'exemple, les algorithmes pourront respectivement utiliser une logique statistique et une logique floue ou une logique de Dempster-Shafer (théorie des évidences).

A l'issue de ces deux étapes, deux consignes préliminaires de supervision C1, C2 ont été calculés et sont transmises au relais 61. Ce dernier va alors avoir pour objectif de sélectionner l'une de ces deux consignes (laquelle sera alors appelée « consigne de supervision C3 ») et de la transmettre à l'organe de conduite 71.

Dans le cas où aucune défaillance n'est constatée, la première consigne préliminaire de supervision C1 sera sélectionnée puisque cette dernière est élaborée en fonction d'un plus grand nombre de données et qu'elle permet ainsi de piloter l'organe de l'organe de conduite 71 de façon autonome sur une durée prolongée.

Dans le cas contraire, la seconde consigne préliminaire de supervision C2 sera sélectionnée puisque cette dernière est élaborée en fonction de données fiables et éprouvées.

Pour que le relais 61 puisse savoir dans lequel des deux cas précités il se trouve, le calculateur principal 1 va établir deux diagnostics Diag1, Diag 2.

Plus précisément, au cours d'une sixième étape, un comparateur 41 équipant le calculateur principal 1 compare les données issues des première et seconde étapes S21, S22 de fusion.

On rappelle que ces deux étapes peuvent être qualifiées de redondantes en ce sens qu'elles sont prévues pour fournir des résultats de même nature et qu'en l'absence d'erreur de calcul, elles sont sensées fournir des résultats proches ou identiques.

En pratique, cette sixième étape peut par exemple consister à comparer, pour chaque donnée résultant de la fusion, la différence entre les valeurs issues des première et seconde étapes S21, S22 de fusion avec un seuil prédéterminé.

Si la différence est inférieure au seuil prédéterminé, ce qui signifie qu'aucune erreur de calcul n'a été constatée, le comparateur 41 émet un premier diagnostic Diag1 positif, signifiant que la première étape de fusion S21 s'est correctement déroulée (la valeur 1 est alors ici affectée au premier diagnostic Diag1).

En revanche, si la différence est supérieure au seuil prédéterminé, ce qui signifie qu'une erreur de calcul a été constatée, le comparateur 41 émet un premier diagnostic Diag1 négatif, signifiant qu'une erreur a pu être commise au cours de la première étape de fusion S21 (la valeur 0 est alors ici affectée au premier diagnostic Diag1).

Au cours d'une septième étape, un contrôleur 33 va vérifier que la première consigne préliminaire de supervision C1 présente une valeur possible (c'est-à-dire non étonnante), compte tenu des données résultant de la première étape S21 de fusion.

Pour cela, le contrôleur 33 acquière une partie au moins des données issues la première étape S21 de fusion, puis il lit les bornes d'un intervalle dans une cartographie mémorisée dans le calculateur principal 1 (lesquelles bornes varient en fonction des données résultant de la première étape S21 de fusion).

Le contrôleur 33 vérifie ensuit si la première consigne préliminaire de supervision C1 est comprise ou non dans cet intervalle.

Si elle est comprise dans cet intervalle, ce qui signifie qu'aucune erreur de calcul n'a été constatée, le contrôleur 33 émet un second diagnostic Diag2 positif, signifiant que la quatrième étape S31 de calcul de la première consigne préliminaire de supervision C1 s'est correctement déroulée (la valeur 1 est alors ici affectée au second diagnostic Diag2).

En revanche, si la première consigne préliminaire de supervision C1 n'est pas comprise dans cet intervalle, ce qui signifie qu'une erreur de calcul a été constatée, le contrôleur 33 émet un second diagnostic Diag2 négatif, signifiant que la quatrième étape S31 de calcul de la première consigne préliminaire de supervision C1 ne s'est pas correctement déroulée (la valeur 0 est alors ici affectée au second diagnostic Diag2).

Au cours d'une huitième étape, le calculateur principal 1 contrôle que les deux diagnostics Diag1, Diag2 sont positifs.

Il comporte à cet effet ici une porte logique 51 du type « OU » qui est connectée, en entrée, au comparateur 41 et au contrôleur 33, et, en sortie, au relais 61.

Grâce à cette porte logique 51, le relais 61 sélectionne la première consigne préliminaire de supervision C1 si les deux diagnostics Diag1, Diag2 sont positifs. Il sélectionne sinon la seconde consigne préliminaire de supervision C2.

On notera ici que si aucun signal n'est transmis par la porte logique 51 au relais 61, par exemple parce que cette dernière est défaillante ou parce que le calculateur principal 1 ne fonctionne plus, le relais 61 considérera naturellement cette absence de signal comme une indication de sélectionner la seconde consigne préliminaire de supervision C2.

Dans le mode de réalisation de la figure 2, non-compris dans la portée de l'invention, le système de pilotage comprend un seul calculateur 1, qui est connecté en entrée aux capteurs 11, 12, 13, 14, et, en sortie, au relais 61.

Ce calculateur 1 est identique et est programmé de manière identique à celui représenté sur la figure 1. Le relais 61 fonctionne également de façon identique à celui représenté sur la figure 1.

On comprend alors que dans ce mode de réalisation, le relais 61 sélectionne la première consigne préliminaire de supervision C1 si les deux diagnostics Diag1, Diag2 sont positifs. Dans le cas contraire, il ne transmet en revanche aucune consigne de supervision à l'organe de pilotage 71. Ce mode de réalisation s'applique alors au cas où le conducteur peut reprendre rapidement le contrôle du véhicule automobile, à l'aide du volant et des pédales d'accélération et de freinage.

Ce mode de réalisation s'applique aussi dans le cas où la disparition de la consigne de supervision n'empêche pas d'assurer la sécurité du véhicule et de ses occupants. A titre d'exemple, elle pourra être employée dans le cas où le système d'aide à la conduite commande un déplacement à faible vitesse du véhicule (ce qui est le cas des systèmes d'aide au parking, où l'application d'une consigne de freinage prédéterminée dans l'organe de freinage est suffisante pour assurer la sécurité recherchée).

## Revendications

1. Procédé d'élaboration d'une consigne de supervision (C3) pour le pilotage d'au moins un organe de conduite (71) d'un véhicule automobile équipé d'une pluralité de capteurs (11, 12, 13, 14), comprenant :
- une première étape de fusion des signaux (S21) reçus d'une première partie au moins des capteurs (11, 12, 13, 14), pour déterminer au moins une première donnée relative à l'environnement autour du véhicule automobile,
- une seconde étape de fusion des signaux (S22) reçus d'une seconde partie au moins des capteurs (11, 12, 13, 14), pour déterminer au moins une seconde donnée relative à l'environnement autour du véhicule automobile,
- une étape de calcul (S31) d'une première consigne préliminaire de supervision (C1) en fonction de chaque première donnée,
comprenant en outre :
- une étape de comparaison des première et seconde données pour établir un premier diagnostic (Diag1),
- une étape de contrôle de la première consigne préliminaire de supervision (C1), compte tenu d'au moins l'une des première et seconde données, pour établir un second diagnostic (Diag2), et
- une étape de détermination de la consigne de supervision (C3) en fonction des premier et second diagnostics (Diag1, Diag2) dans lequel :
- les étapes de fusion et de calcul sont mises en œuvre par un calculateur principal (1) équipant le véhicule automobile,
- il est prévu une autre étape de calcul (S32), mise en œuvre par un calculateur auxiliaire (2) équipant le véhicule automobile, d'une seconde consigne préliminaire de supervision (C2) de chaque organe de conduite (71), compte tenu de signaux émis par une troisième partie au moins des capteurs (11, 12, 13, 14), et
- à l'étape de détermination, la consigne de supervision (C3) est choisie égale à la seconde consigne préliminaire de supervision (C2) si le premier diagnostic (Diag1) indique une discordance entre les résultats des deux étapes de fusion et/ou si le second diagnostic (Diag2) indique une discordance entre la première consigne préliminaire de supervision (C1) et les résultats de l'une au moins des deux étapes de fusion.

2. Procédé d'élaboration selon la revendication précédente, dans lequel, à l'étape de détermination, la consigne de supervision (C3) est choisie égale à la première consigne préliminaire de supervision (C1) si le premier diagnostic (Diag1) indique une concordance entre les résultats des deux étapes de fusion et si le second diagnostic (Diag2) indique une concordance entre la première consigne préliminaire de supervision (C1) et les résultats de l'une au moins des deux étapes de fusion.

3. Procédé d'élaboration selon l'une des revendications 1 et 2, dans lequel aucune consigne de supervision (C3) n'est transmise audit organe de pilotage (71) si le premier diagnostic (Diag1) indique une discordance entre les résultats des deux étapes de fusion et/ou si le second diagnostic (Diag2) indique une discordance entre la première consigne préliminaire de supervision (C1) et les résultats de l'une au moins des deux étapes de fusion.

4. Procédé d'élaboration selon l'une des revendications précédentes, dans lequel, à l'étape de contrôle, on vérifie que la valeur de la première consigne préliminaire de supervision (C1) est comprise dans un intervalle dont les bornes sont définies en fonction de ladite première donnée.

5. Procédé d'élaboration selon l'une des revendications précédentes, dans lequel lesdites première et seconde parties des capteurs (11, 12, 13, 14) forment deux ensembles disjoints ou sécants.

6. Système de pilotage d'au moins un organe de conduite (71) d'un véhicule automobile, comprenant :
- un calculateur principal (1) adapté à recevoir des signaux d'une pluralité de capteurs (11, 12, 13, 14) équipant le véhicule automobile et à calculer une première consigne préliminaire de supervision (C1) pour le pilotage de chaque organe de conduite (71), et
- un relais (61) qui reçoit du calculateur principal (1) ladite première consigne préliminaire de supervision (C1) et qui est adapté à la communiquer ou non à chaque organe de conduite (71),
le système étant adapté à mettre en œuvre un procédé d'élaboration conforme à l'une des revendications précédentes,
le système comprenant en outre un calculateur auxiliaire (2) adapté à recevoir des signaux d'une pluralité de capteurs (11, 12, 13, 14) équipant le véhicule automobile et à calculer une seconde consigne préliminaire de supervision (C2) pour le pilotage de chaque organe de conduite (71), le relais (61) étant adapté à communiquer à chaque organe de conduite (71) l'une ou l'autre des première et seconde consignes préliminaire de supervision (C1, C2).

7. Un programme d'ordinateur, comprenant des moyens de code de programme pour mettre en œuvre le procédé de l'une quelconque des revendications 1 à 5, lorsque ledit programme fonctionne sur un ordinateur.

8. Un produit de programme d'ordinateur, comprenant des moyens de code de programme, stocké sur un milieu lisible par un ordinateur, pour mettre en œuvre le procédé selon l'une quelconque des revendications 1 à 5, lorsque ledit produit de programme fonctionne sur un ordinateur.

## Patentansprüche

1. Verfahren zur Erzeugung eines Überwachungssollwerts (C3) zur Regelung mindestens eines Antriebselements (71) eines Kraftfahrzeugs, das mit mehreren Sensoren (11, 12, 13, 14) ausgestattet ist, bestehend aus:
- einem ersten Schritt zum Zusammenführen der Signale (S21), die von mindestens einem ersten Teil der Sensoren (11, 12, 13, 14) empfangen werden, um mindestens ein erstes Datenelement über die Umgebung des Kraftfahrzeugs zu ermitteln,
- einem zweiten Schritt zum Zusammenführen der Signale (S22), die von mindestens einem zweiten Teil der Sensoren (11, 12, 13, 14) empfangen werden, um mindestens ein zweites Datenelement über die Umgebung des Kraftfahrzeugs zu ermitteln,
- einem Schritt zum Berechnen (S31) eines ersten vorläufigen Überwachungssollwerts (C1) in Abhängigkeit von jedem ersten Datenelement,
zusätzlich bestehend aus:
- einem Schritt zum Vergleichen des ersten und zweiten Datenelements, um eine erste Diagnose (Diag1) zu erstellen,
- einem Schritt zum Prüfen des ersten vorläufigen Überwachungssollwerts (C1) unter Berücksichtigung mindestens eines des ersten und zweiten Datenelements, um eine zweite Diagnose zu erstellen (Diag2), und
- einem Schritt zum Bestimmen des Überwachungssollwerts (C3) in Abhängigkeit von der ersten und der zweiten Diagnose (Diag1, Diag2), wobei:
- die Schritte zum Zusammenführen und Berechnen von einem im Kraftfahrzeug eingebauten Hauptsteuergerät (1) durchgeführt werden,
- ein weiterer Schritt zum Berechnen (S32) eines zweiten vorläufigen Überwachungssollwerts (C2) für jedes Antriebselement (71) vorgesehen ist, der von einem am Kraftfahrzeug angebrachten Zusatzsteuergerät (2) durchgeführt wird, wobei die Signale berücksichtigt werden, die von mindestens einem dritten Teil der Sensoren (11, 12, 13, 14) gesendet werden, und
- in dem Schritt zum Bestimmen der Überwachungssollwert (C3) gleich dem zweiten vorläufigen Überwachungssollwert (C2) gewählt wird, wenn die erste Diagnose (Diag1) eine Diskrepanz zwischen den Ergebnissen der beiden Schritte zum Zusammenführen anzeigt und/oder wenn die zweite Diagnose (Diag2) eine Diskrepanz zwischen dem ersten vorläufigen Überwachungssollwert (C1) und den Ergebnissen von mindestens einem der beiden Schritte zum Zusammenführen anzeigt.

2. Verfahren zur Erzeugung nach dem vorhergehenden Anspruch, wobei im Schritt zum Bestimmen der Überwachungssollwert (C3) gleich dem ersten vorläufigen Überwachungssollwert (C1) gewählt wird, wenn die erste Diagnose (Diag1) eine Übereinstimmung zwischen den Ergebnissen der beiden Schritte zum Zusammenführen anzeigt und wenn die zweite Diagnose (Diag2) eine Übereinstimmung zwischen dem ersten vorläufigen Überwachungssollwert (C1) und den Ergebnissen von mindestens einem der beiden Schritte zum Zusammenführen anzeigt.

3. Verfahren zur Erzeugung nach einem der Ansprüche 1 und 2, wobei kein Überwachungssollwert (C3) an das Steuergerät (71) übermittelt wird, wenn die erste Diagnose (Diag1) eine Diskrepanz zwischen den Ergebnissen der beiden Schritte zum Zusammenführen anzeigt und/oder wenn die zweite Diagnose (Diag2) eine Diskrepanz zwischen dem ersten vorläufigen Überwachungssollwert (C1) und den Ergebnissen von mindestens einem der beiden Schritte zum Zusammenführen anzeigt.

4. Verfahren zur Erzeugung nach einem der vorhergehenden Ansprüche, wobei beim Schritt zum Prüfen überprüft wird, dass der Wert des ersten Überwachungssollwerts (C1) in einem Intervall enthalten ist, dessen Grenzen als Funktion des ersten Datenelements definiert sind.

5. Verfahren zur Erzeugung nach einem der vorhergehenden Ansprüche, wobei der erste und zweite Teil der Sensoren (11, 12, 13, 14) zwei getrennte oder sich überschneidende Mengen bilden.

6. System zur Steuerung von mindestens einem Antriebselement (71) eines Kraftfahrzeugs, das Folgendes aufweist:
- ein Hauptsteuergerät (1), das geeignet ist, Signale von mehreren am Kraftfahrzeug angebrachten Sensoren (11, 12, 13, 14) zu empfangen und einen ersten vorläufigen Überwachungssollwert (C1) für die Steuerung jedes Antriebsmittels (71) zu berechnen, und
- ein Relais (61), das vom Hauptsteuergerät (1) den ersten vorläufigen Überwachungssollwert (C1) empfängt und das dazu geeignet ist, diesen an jedes Antriebsmittel (71) zu übermitteln oder nicht zu übermitteln,
wobei das System so beschaffen ist, dass es ein Verfahren zur Erzeugung nach einem der vorhergehenden Ansprüche durchführt,
wobei das System darüber hinaus ein Zusatzsteuergerät (2) aufweist, das dazu geeignet ist, Signale von mehreren am Kraftfahrzeug angebrachten Sensoren (11, 12, 13, 14) zu empfangen und einen zweiten vorläufigen Überwachungssollwert (C2) für die Steuerung jedes Antriebsmittels (71) zu berechnen, wobei das Relais (61) dazu geeignet ist, jedem Antriebsmittel (71) den einen oder den anderen des ersten und zweiten vorläufigen Überwachungssollwerts (C1, C2) zu übermittelt.

7. Computerprogramm, das Programmcodemittel aufweist, um das Verfahren nach einem der Ansprüche 1 bis 5 umzusetzen, wenn das Programm auf einem Computer läuft.

8. Computerprogrammprodukt, das Programmcodemittel aufweist, und das auf einem Medium, das durch einen Computer lesbar ist, gespeichert ist, um das Verfahren nach einem der Ansprüche 1 bis 5 umzusetzen, wenn das Programmprodukt auf einem Computer läuft.

## Claims

1. Method for generating a supervision setpoint (C3) for controlling at least one driving unit (71) of a motor vehicle equipped with a plurality of sensors (11, 12, 13, 14), comprising:
- a first step of fusing signals (S21) received from at least a first group of sensors (11, 12, 13, 14), with a view to determining at least a first datum relating to the environment around the motor vehicle,
- a second step of fusing signals (S22) received from at least a second group of sensors (11, 12, 13, 14), with a view to determining at least a second datum relating to the environment around the motor vehicle,
- a step (S31) of computing a first preliminary supervision setpoint (C1) depending on each first datum, further comprising:
- a step of comparing the first and second data with a view to establishing a first diagnosis (Diag1),
- a step of testing the first preliminary supervision setpoint (C1), taking into account at least one of the first and second data, with a view to establishing a second diagnosis (Diag2), and
- a step of determining the supervision setpoint (C3) depending on the first and second diagnoses (Diag1, Diag2), wherein:
- the fusing and computing steps are implemented by a main computer (1) with which the motor vehicle is equipped,
- provision is made for another step (S32), implemented by an auxiliary computer (2) with which the motor vehicle is equipped, of computing a second preliminary supervision setpoint (C2) for each driving unit (71), taking into account signals sent by at least a third group of sensors (11, 12, 13, 14), and
- in the determining step, the supervision setpoint (C3) is set equal to the second preliminary supervision setpoint (C2) if the first diagnosis (Diag1) indicates a mismatch between the results of the two fusing steps and/or if the second diagnosis (Diag2) indicates a mismatch between the first preliminary supervision setpoint (C1) and the results of at least one of the two fusing steps.

2. Generating method according to the preceding claim, wherein, in the determining step, the supervision setpoint (C3) is set equal to the first preliminary supervision setpoint (C1) if the first diagnosis (Diag1) indicates a match between the results of the two fusing steps and if the second diagnosis (Diag2) indicates a match between the first preliminary supervision setpoint (C1) and the results of at least one of the two fusing steps.

3. Generating method according to either of Claims 1 and 2, wherein no supervision setpoint (C3) is transmitted to said driving unit (71) if the first diagnosis (Diag1) indicates a mismatch between the results of the two fusing steps and/or if the second diagnosis (Diag2) indicates a mismatch between the first preliminary supervision setpoint (C1) and the results of at least one of the two fusing steps.

4. Generating method according to any of the preceding claims, wherein, in the testing step, it is verified whether the value of the first preliminary supervision setpoint (C1) is contained in an interval the bounds of which are defined depending on said first datum.

5. Generating method according to any of the preceding claims, wherein said first and second groups of sensors (11, 12, 13, 14) form two disjoint or secant sets.

6. Control system for at least one driving unit (71) of a motor vehicle, comprising:
- a main computer (1) configured to receive signals from a plurality of sensors (11, 12, 13, 14) with which the motor vehicle is equipped and to compute a first preliminary supervision setpoint (C1) for controlling each driving unit (71), and
- a relay (61) that receives said first preliminary supervision setpoint (C1) from the main computer (1), and that is configured to communicate or not communicate it to each driving unit (71),
the system being configured to implement a generating method according to any of the preceding claims,
the system further comprising an auxiliary computer (2) configured to receive signals from a plurality of sensors (11, 12, 13, 14) with which the motor vehicle is equipped and to compute a second preliminary supervision setpoint (C2) for controlling each driving unit (71), the relay (61) being configured to communicate to each driving unit (71) either of the first and second preliminary supervision setpoints (C1, C2).

7. Computer program, comprising program code for implementing the method of any of Claims 1 to 5, when said program is run on a computer.

8. Computer program product, comprising program code, stored on a computer-readable medium, for implementing the method according to any of Claims 1 to 5, when said program product is run on a computer.
